**Europäisches Patentamt**

**European Patent Office**

**Office européen des brevets**

(11) Veröffentlichungsnummer : **0 440 933 B1**

(12) ## EUROPÄISCHE PATENTSCHRIFT

(45) Veröffentlichungstag der Patentschrift :
**08.03.95 Patentblatt 95/10**

(51) Int. Cl.⁶ : **H02B 1/21**

(21) Anmeldenummer : **90124084.6**

(22) Anmeldetag : **13.12.90**

(54) **Adapter für Stromsammelschienensysteme.**

(30) Priorität : **03.02.90 DE 4003260**

(43) Veröffentlichungstag der Anmeldung :
**14.08.91 Patentblatt 91/33**

(45) Bekanntmachung des Hinweises auf die
Patenterteilung :
**08.03.95 Patentblatt 95/10**

(84) Benannte Vertragsstaaten :
**AT CH DE ES LI NL**

(56) Entgegenhaltungen :
**EP-A- 0 262 554**
**EP-A- 0 349 782**
**DE-A- 3 413 358**

(73) Patentinhaber : **Efen Elektrotechnische Fabrik
GmbH
Postfach 12 54
D-65332 Eltville (DE)**

(72) Erfinder : **Kahler, Klaus D.
In Anspen 1
W-6209 Heidenrod (DE)**
Erfinder : **Kilian, Francis
Marienthalterstrasse 10
W-6222 Geisenheim (DE)**

(74) Vertreter : **Weber, Dieter, Dr. et al
Weber, Dieter, Dr.,
Seiffert, Klaus, Dipl.-Phys.,
Lieke, Winfried, Dr.
Postfach 61 45
D-65051 Wiesbaden (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen Adapter zum Aufsetzen auf Stromsammelschienensysteme und für den unmittelbaren Anschluß eines elektrischen Gerätes mit den folgenden Merkmalen:

a) der Adapter hat ein Gehäuse sowie mindestens drei an oder in dem Gehäuse aufgenommene und von dem Boden des Gehäuses hervorstehende Hakenkontakte, welche im montierten Zustand je eine Sammelschiene hintergreifen,

b) die Hakenkontakte sind L- oder U-förmig, wobei der sich im wesentlichen senkrecht zum Boden erstreckende L-Schenkel oder U-Teil eine Auflagefläche aufweist,

c) die Auflagefläche der Haken ist für den Eingriff mit einer oberen Kantenfläche einer der Sammelschienen vorgesehen,

wobei der vorstehende Begriff "obere", sowie die in dem folgenden Wortlaut verwendeten Begriffe "untere", "durch die Stromsammelschienen definierte Ebene", "nach oben", "nach unten" sich auf eine Montage des Adapters beziehen an Sammelschienen, die an einer Wand angeordnet sind und in einer vertikalen parallel zu dieser Wand liegenden Ebene übereinanderliegen, wobei die Längsrichtung der Sammelschienen horizontal verläuft und die Haken mit ihren parallel zum Boden verlaufenden Schenkeln die Stromsammelschienen hintergreifen,

d) die Auflagefläche des Hakenkontaktes für die obere Sammelschiene hat einen Abstand a zu einer Gruppe von Anschlußkontakten des Adapters, gemessen parallel zu der durch die Sammelschienen definierten Ebene,

e) das anzuschließende Gerät hat zwei Gruppen von Anschlußkontakten, wobei eine Gruppe mit den Anschlußkontakten des Adapters verbindbar ist, die andere Gruppe eine Abgangsrichtung definiert und beide Gruppen von Anschlußkontakten für einen wahlweisen Abgang nach oben oder unten im wesentlichen symmetrisch zueinander ausgebildet sind und einen Abstand b voneinander haben.

Derartige Hakenadapter sind auf dem einschlägigen Markt bekannt.

Zum Zwecke der Montage an drei im allgemeinen horizontal entlang einer Wand verlaufende Sammelschienen werden die Haken dieser Adapter gelockert und dann gleichzeitig über die drei Sammelschienen gehängt. Dabei hintergreift je ein Schenkel der U- oder L-förmigen Haken je eine Sammelschiene, wobei vorausgesetzt ist, daß die Haken in den gleichen Abständen wie die Sammelschienen voneinander angeordnet sind.

Anschließend werden die Haken mit Hilfe von Schrauben festgezogen, so daß die Sammelschienen zwischen den im Boden des Adapters liegenden Kontaktbrücken und dem die Sammelschienen hintergreifenden Schenkel der Hakenkontakte festgeklemmt werden. Hierdurch wird ein guter elektrischer Kontakt zwischen den Stromsammelschienen und den Kontaktbrücken sichergestellt, wobei die Hakenkontakte ihrerseits über Kontaktbrücken mit Anschlußkontakten elektrisch verbunden sind, welche ihrerseits den Übergang zu einem auf den Adapter aufzusetzenden elektrischen Gerät darstellen. Dieses elektrische Gerät weist entsprechende Anschlußkontakte auf, welche mit den Anschlußkontakten des Adapters verklemmt, verschraubt oder sonstwie elektrisch sicher verbunden werden.

Neben der Verklammerung der Hakenkontakte mit den Stromsammelschienen kann auch zusätzlich noch eine unabhängige und gegebenenfalls elektrisch isolierte mechanische Verbindung zwischen Adapter und mindestens einer der Stromsammelschienen oder einer Stromsammelschienenstütze vorgesehen sein.

Als elektrische Geräte werden auf derartige Adapter im Regelfall sogenannte Sicherungslasttrenner, kurz "Trenner" genannt, aufgesetzt.

Ein solcher Trenner weist oben und unten je eine Gruppe von mindestens drei Anschlußkontakten auf, welche mit den drei Anschlußkontakten des Sammelschienenadapters verbunden werden. Die Richtung "oben" bzw. "unten" ist dabei durch die horizontale Anordnung der Stromsammelschienen mit einer oberen, einer mittleren und einer unteren Schiene - wie eingangs dargelegt - eindeutig definiert.

Liegen die Anschlußkontakte des Adapters oben, so wird die entsprechende obere Gruppe von Anschlußkontakten des Trenners mit den Adapterkontakten verbunden. Der Stromabgang, d.h. die Zuleitungen zu einem Verbraucher hin, erfolgt dann von der unteren Gruppe von Anschlußkontakten aus, also "nach unten". Zwischen der oberen und der unteren Anschlußkontaktgruppe stellen in dem Trenner schaltbare Sicherungseinsätze eine elektrische Verbindung her.

Die EP-A-0.262.554 zeigt eine Einrichtung zum mechanischen und elektrischen Verbinden von Installationsgeräten mit Stromsammelschienen eines Grundsammelschienensystems, bei der in Längsrichtung der Stromsammelschienen mehrere Installationsgeräte im Abstand aneinandergereiht sind und bei der die Anschlußkontaktelemente der Installationsgeräte senkrecht zu den Stromsammelschienen in dem vorgegebenen Mittenabstand der Stromsammelschienen des Grundsammelschienensystems angeordnet sind. Mit Hilfe eines Adapters wird die Anpassung der senkrecht zu den Stromsammelschienen gerichteten Mittenabstände zwischen dem Grundsammelschienensystem und einem abweichenden Sammelschienensystem vorgenommen. Alle Installationsgeräte werden mit ihren Anschlußkontaktelementen auf den Anreihabstand des Adapters gebracht und entsprechend abgesetzte Verbindungsschienen der Installationsgeräte schaffen den für die Anreihung der Installationsgeräte erforderlichen größeren Anreihabstand.

Mit einem derartigen Adapter ist das erfindungsgemäße Ziel, daß beim Übergang auf ein anderes Schienensystem das montierte Installationsgerät auch beim Wechsel der Abgangsrichtung seine Lage in der zugehörigen Aussparung in der Feldabdeckung beibehält, nicht erreichbar.

In der DE-A-3 413 358 wird eine Kontakteinrichtung zur Aufnahme von Schaltgeräten für den Anschluß an Sammelschienen beschrieben. Zur Verbesserung des Kontaktes auch bei hohen Kurzschlußströmen ist das Kontaktierungsteil der Einrichtung als U-förmige Stange ausgebildet. Dieser Stand der Technik bezieht sich lediglich auf eine bekannte Merkmalsgruppe des eingangs bezeichneten Adapters und weist keine Merkmale in Richtung der Erfindung auf.

Will man die Abgangsrichtung wechseln, also beispielsweise von unten nach oben, so muß ein anderer Adapter verwendet werden, dessen Anschlußkontakte entsprechend unten liegen, so daß sie mit der unteren Gruppe von Anschlußkontakten des Trenners verbunden werden können.

Dementsprechend kann dann vom Trenner aus der Abgang nach oben erfolgen.

Es sind auch Adapter bekannt, welche "auf Umschlag passen", also so um 180° gedreht werden können, daß die Anschlunkontakte für die Verbindung mit einem Trenner von "oben" nach "unten" wechseln oder umgekehrt.

Diese Adapter sind jedoch auf die Mittellinie der mittleren Schiene als Orientierungslinie bezogen, d.h. die gedachte Drehachse, welche senkrecht zu der Ebene liegt, welche durch die Ebene der Sammelschienen definiert ist, verläuft durch die Längsmittellinie der mittleren Schiene.

Dagegen sind die Feldabdeckungen und sämtliche direkt oder über Adapter auf Sammelschienen montierten Geräte in ihrer Lage meistens auf die Oberkante der oberen Schiene bezogen. Dies führt dazu, daß ein bestimmter, drehbarer Adapter nur für ein einziges Sammelschienensystem mit einer fest vorgegebenen Schienenbreite auf Umschlag paßt, da sich beim Übergang auf eine andere Schienenbreite die Mittellinie der mittleren Schiene relativ zur Oberkante der oberen Schiene verschiebt, selbst wenn das Stichmaß, d.h. der Abstand der Oberkanten der jeweiligen Schienen zueinander, konstant bleibt. Vergleicht man die Lage der Kontakte eines solchen Adapters relativ zur Oberkante der oberen Stromsammelschiene beim Übergang auf ein System mit größerer Schienenbreite und gleichem Stichmaß, so verschieben sich die Anschlußkontakte um die halbe Schienenbreite nach unten. Umgekehrt verschieben sich die Anschlußkontakte nach oben, wenn die Schienenbreite kleiner wird.

Demgegenüber können zwar die bekannten Adapter mit Hakenkontakten ohne weiteres immer auf die obere Kante der oberen Schiene ausgerichtet werden, indem der obere Haken mit seiner Auflagefläche auf die Oberkante der Schiene aufgelegt wird, jedoch passen derartige Hakenadapter nicht "auf Umschlag". Beim Drehen eines solchen Adapters mit Haken um 180° würde nämlich der zuvor auf der Oberkante der oberen Schiene aufliegende Haken nunmehr an der unteren Kante der unteren Schiene anliegen. Es ist offensichtlich, daß auch in diesem Fall eine symmetrische Position der Anschlußkontakte des Adapters sich nur für eine einzige, feste Schienenbreite ergeben kann, während ansonsten beim Wenden des Adapters auch die Position der Anschlußkontakte sich mit der Schienenbreite verschiebt.

Demgegenüber liegt der vorliegenden Erfindung die Aufgabe zugrunde, einen Hakenadapter mit den eingangs genannten Merkmalen zu schaffen, welcher für verschiedene Stromsammelschienensysteme mit dem gleichen Stichmaß, aber mit unterschiedlichen Schienenbreiten, jeweils auf Umschlag paßt, so daß unabhängig von der Abgangsrichtung "oben" oder "unten", also unabhängig von der Montagerichtung des Adapters, das darauf zu montierende Gerät in seiner festen Position bezüglich der Oberkante der oberen Schiene bleibt.

Im Gegensatz zu den bekannten Adaptern soll also mit dem neuen Adapter erreicht werden, daß beim Übergang auf ein anderes Schienensystem das auf den Adapter zu montierende Gerät auch beim Wechsel der Abgangsrichtung seine Lage bezüglich der für das Gerät vorgesehenen Aussparung in einer Feldabdeckung beibehält.

Diese Aufgabe wird erfindungsgemäß dadurch gelöst, daß

f) die Hakenkontakte in einer ersten um eine Achse senkrecht zum Gehäuseboden nicht gedrehten Stellung oder in einer zweiten um diese Achse um 180° gedrehten Stellung montierbar sind und

g) für den Abstand c der Auflagefläche des ersten äußeren Hakenkontaktes bei der ersten Stellung der Hakenkontakte, und der Auflagefläche des anderen äußeren Hakenkontaktes in der zweiten Stellung die folgende Beziehung gilt:

$$c = |2a - b|,$$

wenn die Strecken a, b einander überlappen und

$$c = 2a + b,$$

wenn die Strecken a, b einander nicht überlappen.

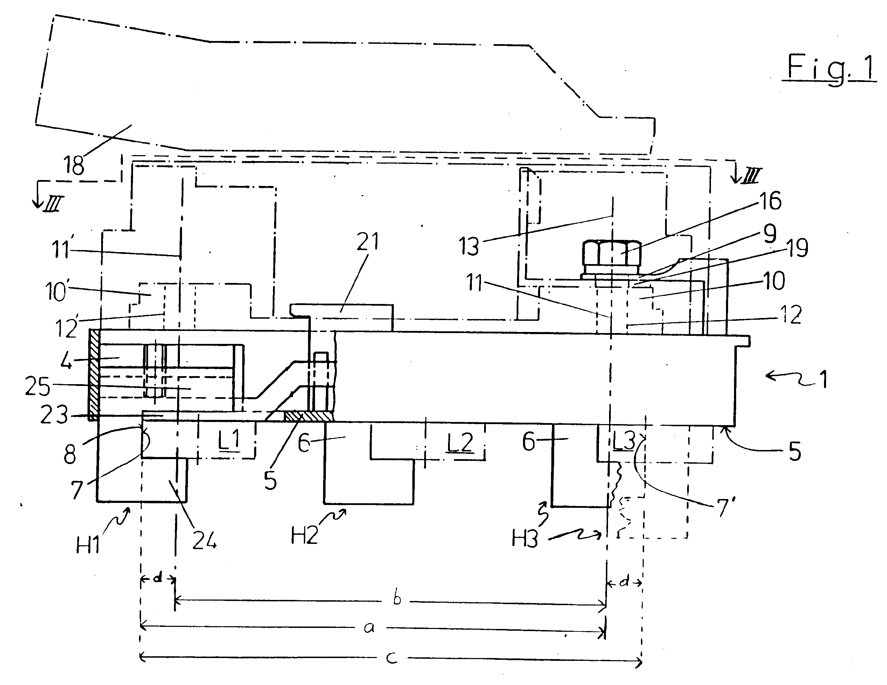

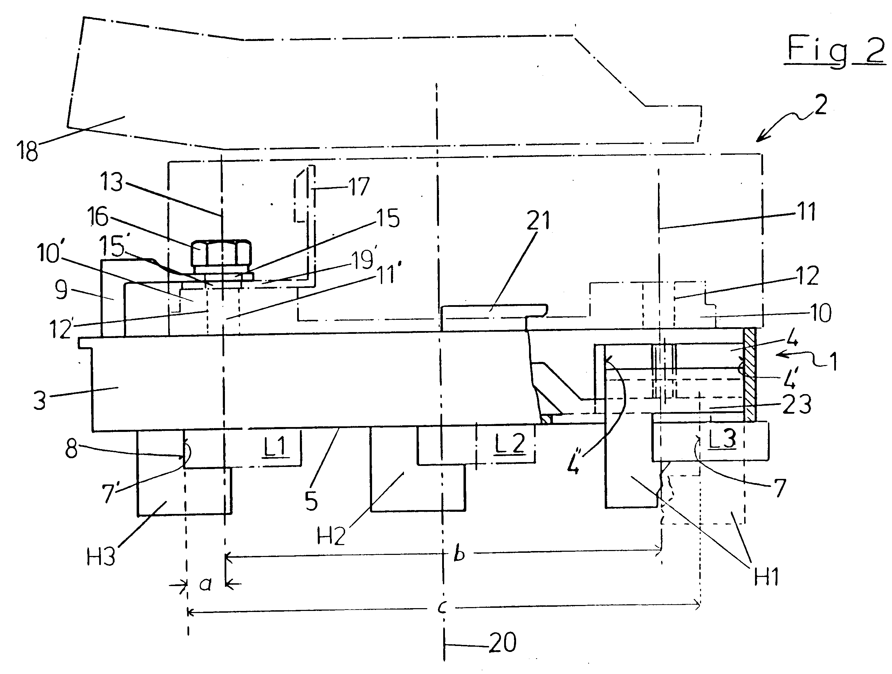

Die vorteilhafte Bedeutung der erfindungsgemäßen Merkmale kann am besten anhand der Figuren 1 und 2 erläutert werden, ohne daß die Erfindung auf diese Ausführungsbeispiele beschränkt werden soll.

Wie man in Figur 1 erkennt, hat die Auflagefläche eines Hakenkontaktes, welche auf der Oberkante der oberen Stromsammelschiene aufliegt, einen Abstand a zu einem Anschlußkontakt des Adapters, wobei die Lage dieses Anschlußkontaktes hier definiert wird durch die Lage der Achse einer Befestigungsbohrung durch den Kontakt. Gemessen wird der Abstand a senkrecht zur Längsrichtung der Schienen und zwar parallel zu der Ebene, welche durch die Schienen selbst definiert wird.

Der Abstand b der zueinander symmetrischen Gruppen von Anschlußkontakten des aufzusetzenden Gerätes wird in der gleichen Richtung gemessen und ist definiert durch den Abstand der Achsen entsprechender Befestigungsbohrungen, die im montierten Zustand im wesentlichen mit den Achsen von Gewindebohrungen in Kontaktsockeln zusammenfallen.

Grundsätzlich ist es möglich, für die Bestimmung der Abstände a, b anstelle der erwähnten Achsen auch beliebige andere Punkte zu wählen, wobei lediglich darauf zu achten ist, daß immer die Abstände zu entsprechenden Punkten bestimmt werden, d.h. solchen Punkten der Adapter-Anschlußkontakte und der Anschlußkontakte des Gerätes, die im montierten Zustand genau übereinanderliegen.

In Figur 1 ist der Haken für die untere Schiene auch in einer um 180° gedrehten Stellung gestrichelt eingezeichnet. Dabei ist der Abstand zwischen den Auflageflächen der beiden äußeren Haken mit c gekennzeichnet. Offensichtlich vertauschen beim Wenden des Adapters die beiden Hakenflächen ihre Rolle, wobei letztlich alle Haken um 180° gedreht werden und nunmehr der Haken auf der Oberkante der oberen Schiene aufliegt, der zuvor auf der unteren Schiene auflag. Da beim Drehen des Adapters auch der Anschlußkontakt mitgenommen wird, ist es offensichtlich, daß der Abstand d der Auflagefläche des gedrehten Hakens zur Achse der Befestigungsbohrung und auch zu der einen Gewindebohrung der gleiche sein muß, wie der Abstand der Auflagefläche des oberen Hakens zu der dort eingezeichneten Gewindebohrung, den man hier leicht als a - b ablesen kann.

Nur wenn diese Bedingung erfüllt ist, bleibt die Lage des auf den Adapter aufgesetzten Gerätes unverändert.

Es gilt also d = a - b. Damit erhält man jedoch unmittelbar die geforderte Bedingung

$$c = a + d = a + a - b = 2a - b.$$

Wie man sieht, überlappen die Strecken a, b einander bei der hier gewählten Definition dieser Strecken. Eine andere Möglichkeit besteht jedoch darin, die Strecke a von der Auflagefläche des anderen Kontaktes her zu definieren, wie dies in Figur 2 dargestellt ist. Im übrigen stimmen die Verhältnisse in Figur 2 im wesentlichen mit denen in Figur 1 überein. In diesem Fall, wo die Strecken a, b so definiert sind, daß sie einander nicht überlappen, erkennt man, daß die Beziehung gilt:

$$c = 2a + b.$$

Grundsätzlich wäre es auch denkbar, daß der Abstand b größer wird als die Strecke c, wobei dann jedoch die Strecken a, b immer einander überlappen. Wie man anhand einfacher geometrischer Überlegungen erkennen kann, bleibt die Gültigkeit der obigen Gleichung erhalten, wenn man den Term (2a - b) in Betragsstriche setzt, also

$$c = |2a - b|.$$

Die auf solche Adapter aufzusetzenden Geräte sind aus Gründen der Produktionsvereinfachung weitgehend normiert und werden mit denselben Abmessungen für verschiedene Stromsammelschienensysteme eingesetzt. Aus diesem Grund ist auch der Abstand b der beiden Kontaktgruppen zueinander bei diesen Geräten fest vorgegeben. Typischerweise beträgt der Abstand b ca. 100-250 mm.

Wird dann bei der Wahl und Anordnung eines Kontakthakens für die obere Sammelschiene auch die Position der Auflagefläche dieses Hakens fest vorgegeben, und damit der Abstand a, so ist lediglich noch darauf zu achten, daß die Haken um 180° verdrehbar sind, wobei für den Abstand der relativ zueinander gedrehten Auflageflächen der beiden äußeren Haken die obige Beziehung gelten muß. Dies erreicht man durch entsprechendes Anordnen der Drehachse der jeweiligen Haken bzw. seiner Befestigungs- und Anlageflächen.

In vorteilhafter Weise bleibt für den hier beschriebenen Adapter die Position seiner Anschlußkontakte bezüglich der Oberkante der oberen Schiene völlig unbeeinflußt von Variationen der Schienenbreite. Wenn der Adapter gewendet, also "auf Umschlag" gesetzt wird, werden seine Anschlußkontakte wiederum aufgrund der Drehung der Hakenkontakte nur an der Oberkante der oberen Schiene ausgerichtet und nehmen dabei eine solche Position ein, daß sie unmittelbar mit der zweiten Gruppe von Anschlußkontakten des elektrischen Gerätes verbunden werden können, ohne daß sich dessen Position verschieben muß.

Bevorzugt ist eine Ausführungsform der Erfindung, bei welcher als aufzusetzendes Gerät ein Trenner vorgesehen ist.

Solche Trenner dienen zum Schalten großer Ströme und sind universell einsetzbar für das Herstellen einer elektrischen Verbindung mit hoher Stromtragfähigkeit bei relativ geringen Spannungen.

Statt eines Trenners könnte jedoch beispielsweise auch ein anderes Schaltgerät, ein Strommeßgerät oder eine Kombination aus Schaltgerät und einem elektrischen Zusatzgerät eingesetzt werden.

Weiterhin ist eine Ausführungsform der Erfindung bevorzugt, bei welcher die Hakenkontakte in Aussparungen des Gehäuses aufgenommen sind, welche im wesentlichen als längliche, rechteckig prismatische Hohlräume ausgebildet sind, in welche mindestens ein Teil eines Hakenkontaktes unter Anlage an mindestens eine Stirnwand des Hohlraumes sowie nach Drehung um 180° unter Anlage an die gegenüberliegende Stirnwand einführbar ist.

Hierfür bietet sich beispielsweise eine U-förmige Gestaltung eines Hakenkontaktes an, wobei ein Schenkel dieses U-Hakens in der Aussparung aufgenommen ist und seine Länge im wesentlichen der Länge der Aussparung entspricht, während der andere U-Schenkel parallel zum Boden des Adaptergehäuses verläuft und eine Sammelschiene hintergreift. Das die beiden U-Schenkel verbindende U-Teil erstreckt sich aus dem Gehäuseboden und bildet auf seiner Innenseite eine Auflagefläche für den Eingriff mit der Oberkante einer Stormsammelschiene, während seine Außenseite als Führungsfläche zur Anlage an einer Stirnwand des Hohlraumes dient. Die Stirnfläche des freien Endes des in der Aussparung aufgenommenen U-Schenkels liegt dann gleitend an der gegenüberliegenden Stirnwand des Hohlraumes an, so daß der Haken eine gute Parallelführung in dem Hohlraum erhält. Mit Hilfe einer Schraube, welche in ein Gewinde eingreift, das sich quer durch den U-Schenkel in der Aussparung erstreckt, und welche sich andererseits an einem Adapterteil abstützt, kann der Hakenkontakt weiter in den Hohlraum hineingezogen oder aus diesem herausgeschoben werden, wodurch das Festklemmen und Lösen des Kontaktes an der Sammelschiene ermöglicht wird.

Gemäß einer anderen Ausführungsform der Erfindung kann der Haken auch einfach L-förmig gestaltet sein, wobei vorzugsweise die Aussparung, in welche sich der eine der beiden L-Schenkel hinein erstreckt, denselben Querschnitt aufweist wie dieser L-Schenkel. Auch hierdurch erreicht man eine saubere Parallelführung des Hakens. Der L-Schenkel kann eine in seiner Längsrichtung verlaufende Gewindebohrung aufweisen, die in ähnlicher Weise ein Lösen und Befestigen des Hakens ermöglicht, wie bei der vorgenannten Ausführungsform. In der bevorzugten Ausführungsform kann der Querschnitt des in die Aussparung eingreifenden L-Schenkels kreisförmig, quadratisch oder länglich rechteckig sein.

Es ist offensichtlich, daß die vorgenannten Ausführungsformen ohne weiteres ein Verdrehen der einzelnen Haken um 180° ermöglichen.

Dabei verändert sich auch die Position der Auflagefläche des Hakens bezüglich des Adapters. Damit die Auflageflächen der äußeren Haken die oben genannte Bedingung erfüllen, müssen bei den zuletzt genannten Ausführungsformen lediglich die Lage und die Ausdehnung der Aussparungen ebenso wie die Dicke des L-Schenkels oder U-Steges, an welchem die Auflagefläche ausgebildet ist, passend gewählt werden.

Weiterhin ist es vorteilhaft, wenn die Aussparungen für die Hakenkontakte einen oder mehrere Rastnocken für die unverlierbare Halterung der Hakenkontakte aufweisen. Diese Rastnocken sind so ausgebildet, daß durch sie die Hakenkontakte in den Aussparungen festgehalten werden, so daß sie unter ihrem eigenen Gewicht oder bei leichten Erschütterungen nicht aus den Aussparungen herausfallen können, gleichzeitig sollen die Haken jedoch unter Überwindung eines gewissen, von den Rastnocken hervorgerufenen Widerstandes aus den Aussparungen herausgenommen und um 180° gewendet werden können.

Zweckmäßigerweise besteht der gesamte Adapter mit Ausnahme der Hakenkontakte, der Anschlußkontakte und entsprechender Verbindungsbrücken und Verstellmöglichkeiten aus Kunststoff.

Schließlich hat sich eine Ausführungsform der Erfindung als besonders zweckmäßig erwiesen, bei welcher der Adapter - in Längsrichtung der Stromsammelschienen gemessen - schmaler ist als der Trenner und zwar vorzugsweise um einen Betrag, welcher der Breite üblicher Sammelschienenstützen entspricht. Dies ermöglicht es, derartige Sammelschienenstützen zu überbauen, ohne daß in dem Gerätefeld irgendwelche Lücken auftreten.

Zu diesem Zweck ist es vorteilhaft, wenn die Kontaktbrücken einen quadratischen Querschnitt aufweisen, so daß sie bei gleicher Stromtragfähigkeit weniger Platz beanspruchen als herkömmlicherweise verwendetes Flachmaterial.

Den Erfindungsgedanken könnte man mit anderen Worten auch so ausdrücken, daß der Abstand der Auflageflächen der relativ zueinander um 180° verdrehten äußeren Haken zu einer Ebene, welche in Längsrichtung der Schiene und senkrecht zu der durch die Schienen definierten Ebene verläuft und welche gleichzeitig die Symmetrieachse für eine 180°-Drehung der Anschlußkontakte des Gerätes enthält, gleich sein muß.

Weitere Vorteile, Merkmale und Anwendungsmöglichkeiten der Erfindung werden deutlich anhand der folgenden Beschreibung bevorzugter Ausführungsformen und der dazugehörigen Figuren. Es zeigen:

Figur 1     einen Längsschnitt durch einen auf Stromsammelschienen aufgesetzten Adapter mit einem - schematisch angedeuteten - darauf aufgesetzten Trenner,

Figur 2     eine Ansicht entsprechend Figur 1 jedoch mit dem um 180° gedrehten Adapter,

Figur 3     eine Ansicht auf Figur 1 von oben,

Figur 4        eine Ansicht auf Figur 2 von oben und
Figur 5        einen Querschnitt durch einen Adapter im Bereich eines Hakenkontaktes.

In Figur 1 erkennt man drei nebeneinander angeordnete Stromsammelschienen L1, L2 und L3 im Querschnitt. Die Längsrichtung der Schienen verläuft hier also senkrecht zur Papierebene, wobei derartige Stromsammelschienen üblicherweise horizontal verlaufend und übereinander an einer Wand und im Abstand zu dieser Wand angeordnet sind. Dabei wird im vorliegenden Fall angenommen, daß die Stromsammelschiene L1 oben angeordnet ist und die Schienen L2 und L3 in gleichmäßigen Abständen darunter verlaufen. Demnach könnte die untere Papierkante als vertikale Wand angesehen werden, entlang welcher die Schienen L1, L2 und L3 im Abstand verlaufen, wobei die in der Zeichnung links dargestellten Teile in der Realität oben liegen. Diese angenommene Orientierung wird auch für die Beschreibung der Figuren 2 bis 4 beibehalten.

Die U-förmigen Haken H1, H2 und H3 hintergreifen mit einem zum Boden 5 des Gehäuses 3 des Adapters 1 parallel verlaufenden Schenkel die Schienen L1, L2 bzw. L3. Dabei liegt der obere Haken H1 mit einer Auflagefläche 7 auf der Oberkante bzw. der oberen Kantenfläche 8 der Schiene L1 auf. Der zweite Schenkel des U-förmigen Hakens H1 ist in einem rechteckig prismatischen Hohlraum 4 mit Passung derart aufgenommen, daß der Haken H1 im wesentlichen nur in (in Figur 1) vertikaler Richtung, d.h. senkrecht zur durch die Stromsammelschienen L1, L2 und L3 definierten Ebene gleitend bewegbar ist.

Der Hohlraum 4 umfaßt eine Aussparung mit gleichen oder größeren Abmessungen im Boden 5 des Gehäuses 3.

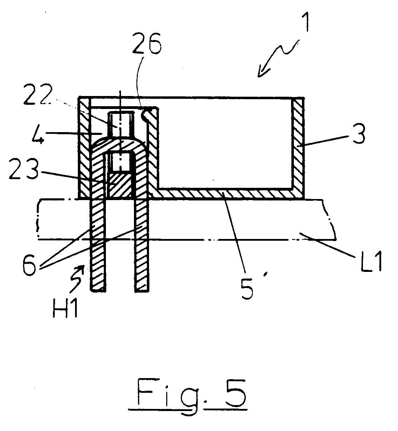

Wie Figur 5 zeigt, ist der beispielhaft dargestellte Haken H1 auch im Querschnitt U-förmig, wobei die Darstellung in Figur 5 einem Schnitt durch den die beiden Hakenschenkel verbindenden U-Teil 6 parallel zur Auflagefläche 7 entspricht.

Wie man aus Figur 1 und Figur 5 erkennt, verläuft im Bereich der Aussparung bzw. des Hohlraumes 4 und im wesentlichen bündig mit dem Boden 5 des Gehäuses 3 eine im Querschnitt quadratische Kontaktbrücke 23, die von den beiden Seitenteilen, aus welchen der Haken H1 besteht, U-förmig umfaßt wird.

In dem diese Seitenteile verbindenden Quersteg ist eine Gewindebohrung vorgesehen, in welche eine Schraube 22 eingreift, wobei durch Anziehen der Schraube 22 deren Grund auf die Oberseite der Kontaktbrücke gedrückt und beim weiteren Anziehen der Haken H1 in den Hohlraum 4 hineingezogen wird, da die Kontaktbrücke 23 im Gehäuse 3 festgelegt ist. Auf diese Weise wird, wie man in Figur 1 erkennt, die Stromsammelschiene L1 zwischen dem freien Schenkel 24 und der Kontaktbrücke 23 festgeklemmt. Dabei liegt die Auflagefläche 7 auf der Oberkante 8 der Schiene L1 auf. Auf diese Weise ist ein sehr guter elektrischer Kontakt zwischen der Stromsammelschiene L1 und der Kontaktbrücke 23 sowie dem Haken H1 sichergestellt.

Die Haken H2 und H3 sind in gleicher Weise auf den Stromsammelschienen L2 bzw. L3 befestigt, wobei die Kontaktbrücken 23 von je einer Stromsammelschiene zu drei getrennten Anschlußkontakten 9 führen, die in einer Ebene senkrecht zur Papierebene in Figur 1 hintereinander angeordnet sind.

Bei der Montage der Haken H1, H2 und H3 wird, wie man sich aus Figur 5 leicht vorstellen kann, ein Haken 6 von oben in den Hohlraum 4 eingeschoben, wobei der Rastnocken 26 seitlich weggedrückt wird. Sobald der Haken H1 in den Hohlraum 4 eingeschoben ist, federt der Rastnocken 26 bzw. die entsprechende Seitenwand des Hohlraumes 4 zurück, so daß der Haken nicht mehr aus dem Hohlraum 4 herausfallen kann, da er mit seinen beiden Seitenwänden einerseits die am Gehäuse 3 befestigte Kontaktbrücke 23 U-förmig umgreift und andererseits von dem Rastnocken 26 zurückgehalten wird. In dieser Stellung ragt der Haken auf der Unterseite des Gehäuses aus dem Boden 5 mehr oder weniger weit heraus, so daß durch entsprechende Einstellung der Schraube 22 der Haken soweit aus dem Gehäuse 3 herausgedrückt werden kann, daß er innerhalb eines vorgegebenen Toleranzbereiches Stromsammelschienen unterschiedlicher Dicke hintergreift.

Auf den Adapter 1 ist ein, in Figur 1 nur schemenhaft mit strichpunktierten Linien umrissener Trenner 2 aufgesetzt, welcher über einen Schlitz in seinem Boden mit einem Rasthaken 21 an der Oberseite des Adaptergehäuses 3 in Eingriff tritt, wodurch er eine zusätzliche Halterung bezüglich des Adapters und auch bezüglich der Stromsammelschienen L1, L2 und L3 erhält. Dabei sind die Anschlußkontakte 9 des Adapters 1 so angeordnet, daß sie mit entsprechenden Anschlußkontakten 19 auf Kontaktsockeln 10, 10′ des Trenners zur Deckung kommen. Die Anschlußkontakte 9 bzw. 19 des Adapters 10 bzw. des Trenners 2 weisen jeweils im montierten Zustand miteinander fluchtende Bohrungen 15, 15′ auf, die wiederum im wesentlichen mit einer Gewindebohrung 12 der Kontaktsockel 10 fluchten. Ein Schraubbolzen 16 wird durch die Bohrungen 15, 15′ hindurchgeführt und in die Gewindebohrung 12 eingeschraubt, so daß die Kontakte 9, 19 flächig fest aufeinandergepreßt werden. Die Anschlußkontakte 19 des Trenners sind ihrerseits einstückig oder über geeignete elektrische Verbindungen mit Kontakten, z.B. Lyra-Kontakten, für Sicherungseinsätze verbunden.

Zu den Kontakten 19 und den Kontaktsockeln 10 sind im Trenner spiegelbildlich entsprechende Teile 10′, 19′ vorgesehen, wovon in Figur 1 nur der Kontaktsockel 10′ dargestellt ist.

Der Abstand zwischen den Kontakten 19, 19′ bzw. den Kontaktsockeln 10, 10′ ist mit b bezeichnet, wodurch der Kontaktabstand als Abstand der Achsen 11, 11′ der Kontaktsockel 10, 10′ bzw. der damit fluchtenden Bohrungen der Anschlußkontakte 19, 19' definiert ist. Grundsätzlich könnte jedoch als Abstand b auch der Abstand beliebiger anderer äquivalenter Punkte der Kontaktsockel 10, 10' oder der Kontakte 19, 19' definiert werden, z.B. der äußere oder innere Rand der Befestigungsbohrungen. Dabei ist lediglich darauf zu achten, daß in entsprechender Weise auch der Abstand a von der Auflagefläche 7 des Hakens zum Anschlußkontakt 9 des Adapters 1 bestimmt wird, d.h. im vorliegenden Fall, daß für die Abstandsbestimmung die Achse 13 der Bohrung 15 des Kontaktes 9 gewählt wird, welche mit der Achse 11 des Kontaktes 19 bzw. der Bohrung 12 des Kontaktsockels 10 zusammenfällt. Bei der Abstandsbestimmung fällt also immer ein Ende der Strecken a, b zusammen. Dabei versteht es sich, daß die Messung senkrecht zur Längsrichtung der Schienen und parallel zu einer durch die Schienen definierten Ebene erfolgt. Die für die Bestimmung der Abstände a, b (und auch c) ausschlaggebenden Kontaktteile sind also auf eine entsprechende Linie zu projizieren, die in Figur 1 horizontal in der Zeichenebene verläuft.

Der Kontakthaken H3 ist in Figur 1 auch gestrichelt gezeichnet in einer um 180° gedrehten und (der besseren Unterscheidung wegen) gelockerten Position dargestellt. In dieser angenommenen Position des Hakens H3, die man auch praktisch realisieren kann, indem man zuvor den Adapter 1 von den Schienen L1, L2 und L3 löst, haben die beiden Auflageflächen 7, 7' voneinander einen Abstand c. Durch die Auflageflächen 7, 7', die je nach Orientierung des Adapters 1 wahlweise auf die obere Kante 8 der Schiene L1 aufgelegt werden kann, ist die Position des Adapters 1 in beiden Drehstellungen eindeutig festgelegt.

Selbstverständlich müssen bei einer Drehung des Adapters 1 sämtliche Haken H1, H2 und H3 um 180° gedreht werden, um von oben auf die Schienen L1, L2 und L3 aufgelegt werden zu können und diese mit den Hakenschenkeln 24 zu hintergreifen. Bezüglich der übrigen Adapterteile bedeutet das Auflegen der Fläche 7' auf die Oberkante 8 der Schiene L1 eine Drehung um 180° um eine Achse 20, welche in der Zeichenebene senkrecht zur Strecke c und genau in der Mitte zwischen den in Figur 1 dargestellten Auflageflächen 7 und 7' verläuft. Diese Achse ist in Figur 2 dargestellt, in welcher der gesamte Adapter in einer um 180° gedrehten Position gezeigt ist, wobei jedoch auch die Haken H1, H2 und H3 in ihren jeweiligen Hohlräumen 4 gedreht sind, so daß sie die Schienen L1, L2 und L3 nach wie vor von oben hintergreifen, wobei lediglich die Haken H1 und H3 ihre Position bezüglich Figur 1 getauscht haben. Es versteht sich, daß die Haken H1 bis H3 zweckmäßigerweise gleichartig ausgeführt sind und dieselben Abmessungen haben, so daß selbstverständlich auch ein Austausch der Haken H1 bis H3 in den verschiedenen Hohlräumen 4 möglich wäre.

Die Drehung um die Achse 20 und damit der symmetrische Austausch der Flächen 7 und 7' bedeutet unter anderem, daß die Strecke d, die in Figur 1 den Abstand der Fläche 7 zur Achse 11' des Kontaktsockels 10' bezeichnet mit dem gegenüberliegenden Abstand zwischen der Fläche 7' und der Achse 11 des Kontaktsockels 10 übereinstimmt. Andererseits liest man aus Figur 1 ab, daß die Strecke d gleich a - b ist, so daß sich aus Figur 1 ebenso leicht die Bedingung c = a + d = 2a - b ablesen läßt. Daß die Kontaktsockel 10, 10' und die Kontakte 19, 19' zur selben Achse 20 bezüglich einer Drehung um 180° symmetrisch sein müssen wie die Auflageflächen 7, 7' in der relativ zueinander verdrehten Stellung der Haken H1 und H3, ergibt sich aus der Bedingung, daß - ausgehend von Figur 1 - die Kontakte 9 des Adapters 1 nach einer Drehung um 180° in die in Figur 2 dargestellte Position wieder mit den entsprechenden Kontakten 19' auf den Kontaktsockeln 10' zur Deckung kommen müssen, wenn sich die Position des Trenners 2, der nicht mitgedreht werden darf, nicht verschieben soll.

Ausgehend von einem Trenner mit im wesentlichen symmetrischen Kontaktgruppen 19, 19' bzw. Kontaktsockeln 10, 10', kann man also die gemäß der vorliegenden Erfindung an einen Hakenadapter zu stellende Bedingung auch so formulieren, daß durch die Kontakte 19, 19' bzw. Kontaktsockel 10, 10' eine Symmetrieachse 20 definiert wird, wie sie in Figur 2 dargestellt ist. Bei einer Drehung um die Achse 20 würden also alle für die Verbindung mit den Kontakten 9 des Adapters wesentlichen Teile der Kontaktsockel 10, 10' bzw. der Kontakte 19, 19' in sich selbst überführt.

Die Hakenkontakte H1 bis H3 und ihre drehbare Anordnung im Adapter 1 sind dann so zu wählen, daß dann, wenn einer der beiden äußeren Hakenkontakte relativ zum anderen gedreht ist, die beiden Auflageflächen 7, 7' bezüglich der Achse 20 in der Zeichenebene spiegelbildlich liegen. Dabei kommt es nicht darauf an, daß der Haken H1 bei einer Drehung des Adapters 1 um 180° tatsächlich in die genaue Position des Hakens H3 überführt wird, sondern es sind lediglich die Abstandsbedingungen entlang einer horizontalen Linie in der Zeichenebene der Figuren 1 und 2 zu erfüllen.

Da der Abstand a als Abstand der auf der Oberkante der Schiene 8 aufliegenden Fläche 7 bzw. 7' zum Kontakt 9 definiert ist, wobei jedoch die Position des Kontaktes 9 mit einer Drehung des Adapters um 180° wechselt, ändert sich beim Übergang von der in Figur 1 dargestellten Position in die in Figur 2 dargestellte Position auch die Strecke a selbst. Die gleichen Symmetrieüberlegungen wie im Zusammenhang mit Figur 1 führen jedoch dazu, daß der Abstand a nochmals auftauchen muß als Abstand der Fläche 7 zur Achse 11 auf der rechten Seite in Figur 2. Insgesamt ergibt sich damit für die Strecke c die zweite Bedingung c = 2a + b. Wie man durch Vergleich der Figuren 1 und 2 erkennt, kann man diese beiden Fälle leicht dadurch auseinanderhalten, daß im erstgenannten Fall die Strecken a, b einander teilweise überlappen, während dies im Fall der Figur 2 nicht gilt, wo die Strecke a gegenüber figur 1 die Rolle der Strecke d übernommen hat.

Selbstverständlich wäre es auch denkbar, daß der Abstand der Achsen 11, 11′ größer ist als der Abstand der Flächen 7, 7′ der relativ zueinander verdrehten Haken H1 und H3. Auch für diesen Fall gilt die oben zuerst erwähnte Beziehung

$$c = 2a - b,$$

wobei den unterschiedlichen Definitionen für die Strecke a, die dann immer mit der Strecke b teilweise überlappt, dadurch Rechnung getragen wird, daß der Term 2a - b in Betragsstriche gesetzt wird, also allgemein die Bedingung gilt:

$$c = |2a - b|.$$

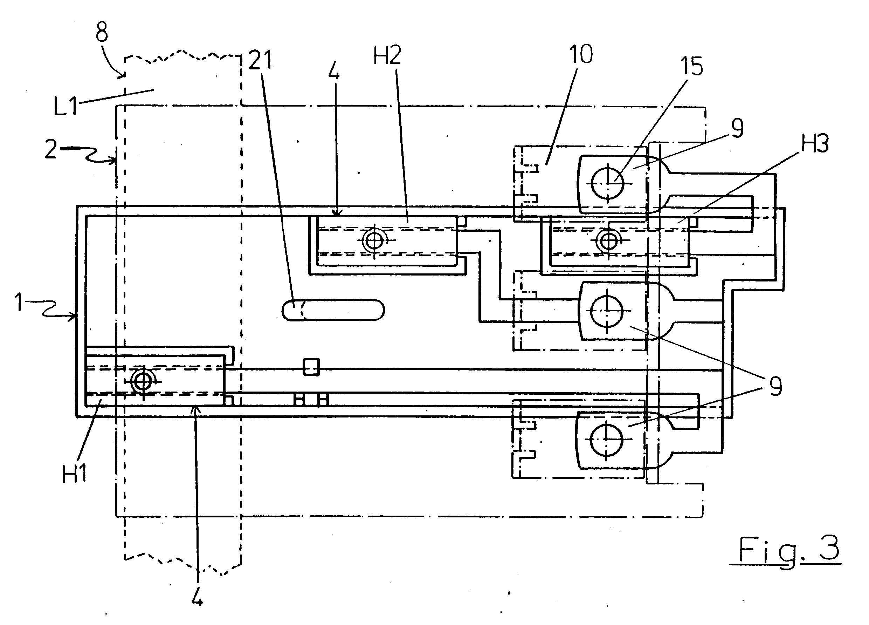

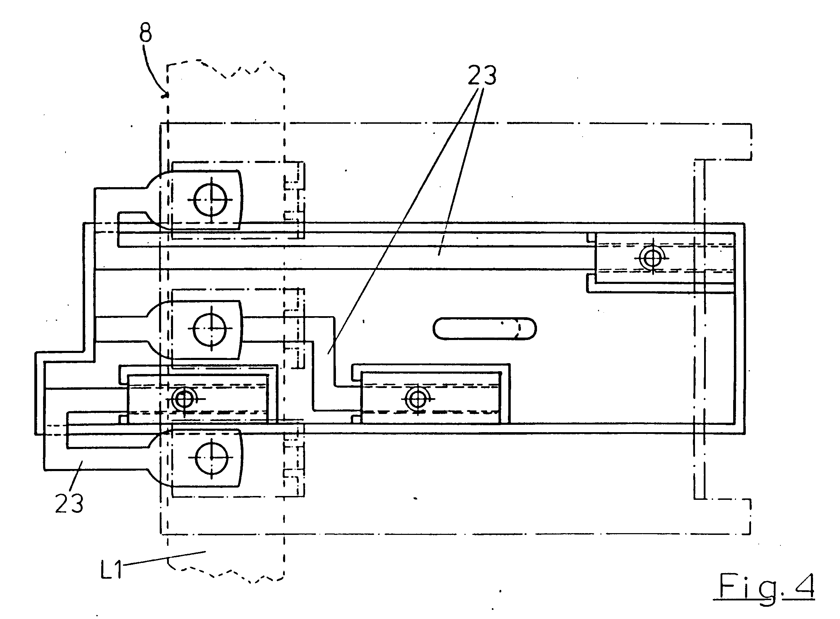

Die Figuren 3 und 4 zeigen je eine Draufsicht auf die Figuren 1 und 2 und zwar ohne den Handbetätigungshebel 18 des Trenners 2, also im wesentlichen von einer Ebene her, die durch die gestrichelte Linie III-III in Figur 1 angedeutet ist.

In den Figuren 3 und 4 erkennt man, daß die Haken H1, H2 und H3 über Kontaktbrücken 23, die sich teilweise über den unteren Bereich des Hohlraumes 4, teilweise auch im Inneren des Gehäuses 3 des Adapters 1 erstrecken, mit je einem von drei Anschlußkontakten 9 verbunden sind. In etwa in der Mitte des Gehäuses 3 ist ein Rasthaken 21 für die Verbindung mit dem aufzusetzenden Adapter vorgesehen.

Strichpunktiert sind im Bereich der Kontakte 9 die Kontaktsockel 10 bzw. 10′ eingezeichnet, welche in Flucht mit der Bohrung 15 im Kontakt 9 Gewindebohrungen 12 aufweisen. Nicht dargestellt sind in den Figuren 3 und 4 die Anschlußkontakte 19, 19′ des Trenners 2, welche ebenfalls mit den Bohrungen 15 fluchtende Bohrungen aufweisen und über Gewindebolzen 16 mit den Kontakten 9 verschraubt werden. Die jeweils nicht mit den Kontakten 9 verschraubten Anschlußkontakte 19 bzw. 19′ dienen als Abgangsanschlüsse, die dementsprechend je nach einer der gewählten, in den Figuren 3 und 4 dargestellten Positionen entweder links oder rechts liegt bzw. unter der eingangs erwähnten Konvention oben oder unten. Zur Veranschaulichung der Funktion des Adapters 1 ist noch die Position der Sammelschiene L1 gestrichelt angedeutet, auf deren Oberkante 8 im Falle der Figur 3 die Fläche 7 des Hakens H1 aufliegt, während im Falle der Figur 4 die Fläche 7′ des Hakens H3 auf der Oberkante 8 der Schiene L1 aufliegt.

Wie man weiterhin erkennt, ist der Haken H1 bezüglich der Haken H2 und H3 auch in Längsrichtung der Stromsammelschienen versetzt, was jedoch für die vorliegende Erfindung ohne Bedeutung ist. Die relative Versetzung der Haken H1 bis H3 zueinander erfolgt im wesentlichen aus Gründen einer vereinfachten Führung der Kontaktbrücken 23, wobei der Haken H2 aus der Mitte heraus versetzt ist, um Platz für den Rasthaken 21 zu bieten.

Der Vergleich der Figuren 3 und 4 miteinander zeigt sehr deutlich die Wirkung der vorliegenden Erfindung, daß trotz Drehung des Adapters 1 um 180° die Lage des Gehäuses des Trenners 2 und damit des Trenners 2 insgesamt völlig unverändert bleibt, wie man am Abstand des Gehäuses 2 zur Oberkante 8 der Schiene 1 gut erkennen kann. Dies ist deshalb wichtig, weil dann beim Wechsel der Abgangsrichtung der Trenner exakt in der Aussparung einer Feldabdeckung liegen bleibt, welche die übrige Umgebung der Stromsammelschienen aus Sicherheitsgründen abdeckt.

Ein weiterer Vorteil des neuen Hakenadapters liegt in seiner schmalen Bauweise. An Stromsammelschienen sind in regelmäßigen Abständen sogenannte Stützer vorgesehen, welche die Stromsammelschienen haltern. Im Bereich eines solchen Stützers kann weder ein Adapter noch ein sonstiges Gerät montiert werden, so daß sich bei der Montage einer Reihe von Schalteinheiten nebeneinander im Bereich der Stützer häufig Lücken zwischen den Schalteinheiten ergeben. Mit der schmalen Ausführungsform des Adapters, wie sie in den Figuren 3 und 4 dargestellt ist, kann jedoch der Adapter unmittelbar neben einem Stützer montiert werden, wobei gleichzeitig der auf den Adapter 1 aufgesetzte Trenner über den Stützer hinausragt.

Dabei muß selbstverständlich die Höhe des Adaptergehäuses die über die Schienen hinausragende Höhe der Stützer übersteigen.

Auf diese Weise ist es möglich, auch im Bereich von Stützern eine lückenlose Reihe von Schaltelementen anzuordnen. Zu diesem Zweck erweist es sich als besonders zweckmäßig, daß die Kontaktbrücken 23 einen im wesentlichen quadratischen Querschnitt haben, so daß sie im Gegensatz zu Flachmaterial in der Breite weniger Platz beanspruchen und dadurch erst den schmalen Adapterbau ermöglichen. Andererseits ist dieser Kontaktbrückenquerschnitt auch gewählt worden, um die Kontaktbrücken leicht zwischen die Seitenwände der Hakenkontakte H1 bis H3 einführen zu können, da ansonsten die Hakenkontakte übermäßig breit geworden wären. Selbstverständlich müssen die Kontaktbrücken 23 keinen exakt quadratischen Querschnitt haben, jedoch muß ihre Dicke gegenüber üblicherweise verwendetem Flachmaterial deutlich vergrößert sein, damit sie eine entsprechende Stromtragfähigkeit aufweisen.

Der erfindungsgemäße Adapter ist sehr vielseitig verwendbar und weitgehend von dem konkret verwendeten Stromsammelschienensystem unabhängig. Insbesondere hat eine Änderung der Schienenbreite bei gleichbleibendem Stichmaß keinen Einfluß auf die Lage des darauf zu montierenden Trenners und zwar auch unabhängig von der gewählten Abgangsrichtung.

Selbst eine geringe Vergrößerung des Stichmaßes läßt eine Verwendung dieses Adapters in der gleichen vorteilhaften Weise zu, solange nur die U-Schenkel 24 der Hakenteile H2 und H3 ein zur Herstellung des elektrischen Kontaktes genügendes Stück der Schienen L2 bzw. L3 erfassen.

**Patentansprüche**

1. Adapter zum Aufsetzen auf Stromsammelschienensysteme und für den unmittelbaren Anschluß eines elektrischen Gerätes (2) mit den folgenden Merkmalen:

a) der Adapter (1) hat ein Gehäuse (3) sowie mindestens drei an oder in dem Gehäuse (3) aufgenommene und von dem Boden (5) des Gehäuses (3) hervorstehende Hakenkontakte (H1, H2, H3), welche im montierten Zustand je eine Sammelschiene (L1, L2, L3) hintergreifen,

b) die Hakenkontakte (H1, H2, H3) sind L- oder U-förmig, wobei der sich im wesentlichen senkrecht zum Boden (5) erstreckende L-Schenkel (6) oder U-Teil (6) eine Auflagefläche (7, 7′) aufweist,

c) die Auflagefläche (7, 7′) der Haken ist für den Eingriff mit einer oberen Kantenfläche (8) einer der Sammelschienen (L1, L2, L3) vorgesehen,

wobei der vorstehende Begriff "obere", sowie die in dem folgenden Wortlaut des Anspruches verwendeten Begriffe "untere", "durch die Stromsammelschienen definierte Ebene", "nach oben", "nach unten" sich auf eine Montage des Adapters (1) beziehen an Sammelschienen (L1, L2, L3), die an einer Wand angeordnet sind und in einer vertikalen parallel zu dieser Wand liegenden Ebene übereinanderliegen, wobei die Längsrichtung der Sammelschienen (L1, L2, L3) horizontal verläuft und die Haken mit ihren parallel zum Boden (5) verlaufenden Schenkeln die Stromsammelschienen hintergreifen,

d) die Auflagefläche (7) des Hakenkontaktes (H1) für die obere Sammelschiene (L1) hat einen Abstand a zu einer Gruppe von Anschlußkontakten (9) des Adapters (1), gemessen parallel zu der durch die Sammelschienen (L1, L2, L3) definierten Ebene,

e) das anzuschließende Gerät hat zwei Gruppen von Anschlußkontakten (19, 19′), wobei eine Gruppe mit den Anschlußkontakten (9) des Adapters (1) verbindbar ist, die andere Gruppe eine Abgangsrichtung definiert und beide Gruppen von Anschlußkontakten (19, 19′) für einen wahlweisen Abgang nach oben oder unten im wesentlichen symmetrisch zueinander ausgebildet sind und einen Abstand b voneinander haben,

dadurch gekennzeichnet, daß

f) die Hakenkontakte (H1, H2, H3) in einer um eine Achse senkrecht zum Gehäuseboden nicht gedrehten Stellung oder in einer zweiten um diese Achse um 180° gedrehten Stellung montierbar sind und

g) für den Abstand c der Auflagefläche (7) des ersten äußeren Hakenkontaktes (H1) bei der ersten Stellung der Hakenkontakte (H1, H2, H3), und der Auflagefläche (7′) des anderen äußeren Hakenkontaktes (H3) in der zweiten Stellung die folgende Beziehung gilt:

$$c = \left| 2a - b \right|,$$

wenn die Strecken a, b einander überlappen und

$$c = 2a + b,$$

wenn die Strecken a, b einander nicht überlappen.

2. Adapter nach Anspruch 1, dadurch gekennzeichnet, daß der Abstand b durch den Abstand der Achsen (11) von Gewindebohrungen (12) an Kontaktsockeln (10, 10′) der Gruppen von Anschlußkontakten (19, 19′ des elektrischen Gerätes (2) definiert ist und daß der Abstand a definiert ist durch den Abstand der Auflagefläche (7, 7′) zur Achse (13) einer Bohrung durch die Anschlußkontakte (9) des Adapters (1), wobei im montierten Zustand die Achse (13) der Bohrungen von Anschlußkontakten (9) des Adapters (1) mit der Achse (11) einer der Gruppen von Anschlußkontakten (19) des Gerätes (2) zusammenfällt.

3. Adapter nach Anspruch 1 oder 2, dadurch gekennzeichnet, daß das elektrische Gerät ein Sicherungslasttrenner ist.

4. Adapter nach einem der Ansprüche 1 bis 3, dadurch gekennzeichnet, daß die Hakenkontakte (H1, H2, H3) in Aussparungen (4) des Gehäuses (1) aufgenommen sind, welche im wesentlichen als längliche, rechteckig prismatische Hohlräume ausgebildet sind, in welche mindestens ein Teil (25) eines Hakenkontaktes (H1, H2, H3) unter Anlage an mindestens eine Stirnwand (4′) des Hohlraumes sowie nach Drehung um 180° unter Anlage an die gegenüberliegende Stirnwand (4″) des Hohlraumes einführbar ist.

5. Adapter nach Anspruch 4, dadurch gekennzeichnet, daß die Aussparung (4) einen Rastnocken (26) für die Sicherung eines Hakenkontaktes (H1, H2, H3) gegen Herausfallen aufweist.

6. Adapter nach einem der Ansprüche 1 bis 5, dadurch gekennzeichnet, daß er mit Ausnahme von Kontakten und Kontaktbrücken aus Kunststoff besteht.

7. Adapter nach einem der Ansprüche 1 bis 6, dadurch gekennzeichnet, daß er in Richtung parallel zu den Stromsammelschienen (L1, L2, L3) schmaler ist als das aufzusetzende Gerät (2).

8. Adapter nach Anspruch 7, dadurch gekennzeichnet, daß die Kontaktbrücken einen im wesentlichen quadratischen Querschnitt haben und daß der Adapter um mindestens die Breite einer Sammelschienenstütze schmaler als das aufzusetzende Gerät (2) ist.

9. Adapter nach einem der Ansprüche 1 bis 9, dadurch gekennzeichnet, daß die Hakenkontakte (H1, H2, H3) L-förmig sind und daß der Querschnitt des aus dem Boden (5) des Gehäuses herausragenden L-Schenkels mit dem Querschnitt der Aussparung (4) übereinstimmt.

10. Adapter nach Anspruch 9, dadurch gekennzeichnet, daß für die Aufnahme des L-Schenkels eines Hakenkontaktes (H1, H2, H3) mindestens zwei Aussparungen im Boden (5) des Gehäuses (3) vorgesehen sind.

11. Adapter nach Anspruch 9 oder 10, dadurch gekennzeichnet, daß der Querschnitt des L-Schenkels und der Aussparungen (4) jeweils kreisförmig, quadratisch oder länglich rechteckig ist.

12. Adapter nach einem der Ansprüche 1 bis 8, dadurch gekennzeichnet, daß die Kontakthaken (H1, H2, H3) U-förmig ausgebildet sind, wobei ein Schenkel (25) des U-Teils in einem Hohlraum (4) des Adapters (1) aufgenommen ist, während der zweite U-Schenkel (24) außerhalb des Gehäuses (2) und parallel zu dessen Boden (5) verläuft, so daß der Verbindungssteg (6) der beiden U-Schenkel (24, 25) sich aus dem Boden (5) des Gehäuses (2) heraus erstreckt, wobei die Länge des ersten U-Schenkels (25) der Länge des Hohlraumes (4) entspricht und die Stirnseiten dieses Schenkels (25) großflächig an den Stirnwänden des Hohlraumes (4) anliegen, wobei eine dieser Stirnflächen des U-Schenkels mit der Grundfläche des Verbindungssteges (6) zusammenfällt.

13. Adapter nach Anspruch 12, dadurch gekennzeichnet, daß die in der Seitenansicht U-förmigen Haken (H1, H2, H3) auch im Querschnitt U-förmig mit sich aus dem Gehäuse (2) des Adapters (1) heraus erstreckenden und zueinander spiegelbildlichen Seitenwänden ausgebildet sind, wobei der Verbindungssteg der beiden Seitenwände an dem im Hohlraum (4) aufgenommenen U-Schenkel (25) der Haken (H1, H2, H3) liegt.

14. Adapter nach Anspruch 13, dadurch gekennzeichnet, daß der Verbindungssteg des U- Schenkels (25) eine Gewindebohrung aufweist, deren Achse im wesentlichen parallel zum Verbindungteil (6) verläuft.

## Claims

1. Adaptor for placing on busbar systems and for direct connection of an electrical device (2), with the following features:

a) the adaptor (1) has a housing (3) as well as at least three hook contacts (H1, H2, H3) incorporated on or in the housing and projecting upwardly from the base (5) of the housing (3), which in the assembled state each engage behind a busbar (L1, L2, L3),

b) the hook contacts (H1, H2, H3) are L or U shaped, wherein the arm of the L (6) or part of the U (6) extending substantially vertically with respect to the base (5) is provided with a contact area (7, 7′),

c) the contact area (7, 7′) of the hooks is provided for engaging with an upper edge surface (8) of one of the busbars (L1, L2, L3), wherein the present term "upper", as well as the terms "lower", "plane defined by the busbar", "upward" and "downward" used hereinafter in the wording of the claim relate to an assembly of the adaptor (1) on busbars (L1, L2, L3) which are arranged on a wall and lie one above the other in a plane vertically parallel to said wall, wherein the longitudinal orientation of the busbars (L1, L2, L3) runs horizontally and the hooks engage behind the busbars by means of their arms which are parallel to the base (5),

d) the contact area (7) of the hook contact (H1) for the upper busbar (L1) is at a distance a from a group of terminal contact (9) of the adaptor (1) measured parallel to the plane defined by the busbars (L1, L2, L3),

e) the device to be connected has two groups of terminal contacts (19, 19'), wherein one group is connectable to the terminal contacts (9) of the adaptor (1), the other group defines an outgoing direction and both groups of terminal contacts (19, 19') are configured substantially symmetrically with respect to each other for selective outgoing above or below, and are at a distance apart a,

characterised in that

f) the hook contacts (H1, H2, H3) are in a position which is not rotated perpendicularly with respect to the base of the housing about an axis, or can be assembled in a second position rotated about this axis by 180°, and

g) the following relationship exists between the distance c of the contact area (7) of the first outer hook contact (H1) in the first position of the hook contacts (H1, H2, H3) and the contact area (7') of the other outer hook contact (H3) in the second position:

$$c = |2a - b|$$

when the distances a, b overlap, and

$$c = 2a + b$$

when the distances a, b do not overlap.

2. Adaptor according to claim 1, characterised in that the distance b is defined by the distances between the axes (11) of threaded bores (12) in contact bases (10, 10') of the groups of terminal contacts (19, 19') of the electrical device (2) and the distance a is defined by the distance of between the contact areas (7, 7') and the axis (13) of a bore through the terminal contact (9) of the adaptor (1), wherein in the assembled state the axes (13) of the bores in the terminal contacts (9) of the adaptor (1) coincide with the axes (11) of one of the groups of terminal contacts (19) of the device (2).

3. Adaptor according to claim 1 or 2, characterised in that the electrical device is a fuse switch-disconnecter.

4. Adaptor according to one of claims 1 to 3, characterised in that the hook contacts (H1, H2, H3) are accommodated in recesses (4) in the housing (1), which are substantially configured as long, rectangular prism shaped hollows, in which at least a part (25) of a hook contact (H1, H2, H3) can be inserted by lying against at least one face (4') of the hollow space as well by lying against the opposite face (4") of the hollow space following rotation by 180°.

5. Adaptor according to claim 4, characterised in that the recess (4) is provided with a catch stop (26) for preventing a hook contact (H1, H2, H3) from falling out of place.

6. Adaptor according to one of claims 1 to 5, characterised in that, with the exception of contacts and contact bridges, it is made from plastics material.

7. Adaptor according to one of claims 1 to 6, characterised in that it is narrower in the orientation parallel to the busbars (L1, L2, L3) than the device (2) to be placed thereupon.

8. Adaptor according to claim 7, characterised in that the contact bridges have a substantially square cross-section and that the adaptor is narrower, by at least the width of a busbar support, than the device (2) to be placed thereupon.

9. Adaptor according to one of claims 1 to 9, characterised in that the hook contacts (H1, H2, H3) are L-shaped and that the cross-section of the arm of the L projecting from the base (5) of the housing conforms to the cross-section of the recess (4).

10. Adaptor according to claim 9, characterised in that at least two recesses are provided in the base (5) of the housing (3) for receiving the arm of the L shape of a hook contact (H1, H2, H3).

11. Adaptor according claim 9 or 10, characterised in that the cross-sections of the arm of the L and of the recesses (4) are respectively circular, square or oblong.

12. Adaptor according to one of claims 1 to 8, characterised in that the contact hooks (H1, H2, H3) are configured in a U-shape, wherein one arm (25) of the U-shaped part is received in a hollow space (4) in the adaptor (1), while the other arm of the U (24) runs outside the housing (2) and parallel to the base (5) thereof, so that the connection bar (6) of the two arms of the U-shape (24, 25) extends out of the base (5) of the housing (2), wherein the length of the first arm of the U-shape (25) corresponds to the length of the hollow space (4) and the faces of this arm (25) lie extensively against the end walls of the hollow space (4), wherein one of these faces of the arm of the U-shape coincides with the surface area of the connection bar (6).

13. Adaptor according to claim 12, characterised in that the hooks (H1, H2, H3) which are U-shaped when viewed from the side are also configured with side walls with a U-shaped cross-section which extend from the housing (2) of the adaptor (1) and are the mirror image of one another, wherein the connection bar of the two side walls lies on the arm of the U-shape (25) of the hooks (H1, H2, H3) received in the hollow space (4).

14. Adaptor according to claim 13, characterised in that the connection bar of the arm of the U-shape is provided with a threaded bore, the axis of which is substantially parallel to the connection piece (6).

## Revendications

1. Adaptateur pour mise en place sur des systèmes de barres omnibus et pour raccordement direct d'un appareil électrique (2), présentant les caractéristiques suivantes :

   a) l'adaptateur (1) possède une enveloppe (3), et au moins trois contacts à crochets (H1, H2, H3), logés contre ou dans l'enveloppe (3), et en saillie par rapport au fond (5) de l'enveloppe (3), contacts à crochets qui, à l'état monté, passent chacun derrière une barre omnibus (L1, L2, L3),

   b) les contacts à crochets (H1, H2, H3) ont la forme d'un L ou d'un U, la branche du L (6) ou la partie du U (6), s'étendant essentiellement perpendiculairement au fond (5), présentant une surface d'appui (7, 7'),

   c) la surface d'appui (7, 7') des crochets est prévue pour entrer en prise avec une rive supérieure (8) de l'une des barres omnibus (L1, L2, L3),

   où le terme ci-dessus "supérieur", ainsi que les termes et expressions utilisés dans la suite de la revendication, "inférieur", "plan défini par les barres omnibus", "vers le haut", "vers le bas", se rapportent à un montage de l'adaptateur (1) sur des barres omnibus (L1, L2, L3) qui sont disposées contre une paroi et se trouvent les unes au-dessus des autres, dans un plan vertical parallèle à cette paroi, la direction longitudinale des barres omnibus (L1, L2, L3) étant horizontale, et les crochets, par leurs branches parallèles au fond (5), passant derrière les barres omnibus,

   d) la surface d'appui (7) du contact à crochet (H1) servant à la barre omnibus supérieure (L1) se trouve à une distance a d'un groupe de contacts de raccordement (9) de l'adaptateur (1), la mesure étant effectuée parallèlement au plan défini par les barres omnibus (L1, L2, L3),

   e) l'appareil à raccorder possède deux groupes de contact de raccordement (19, 19'), un groupe pouvant être connecté aux contacts de raccordement (9) de l'adaptateur (1), l'autre groupe définissant une direction de départ, et les deux groupes de contacts de raccordement (19, 19') présentant, pour permettre un départ au choix vers le haut ou vers le bas, une configuration essentiellement symétrique l'un par rapport à l'autre, et se trouvant à une distance réciproque b,

   caractérisé en ce que :

   f) les contacts à crochets (H1, H2, H3) peuvent être montés dans une position n'ayant subi aucune rotation par rapport à un axe perpendiculaire au fond de l'enveloppe, ou encore dans une deuxième position, ayant subi une rotation de 180° autour de cet axe, et

   g) on a, entre la distance c entre la surface d'appui (7) du premier contact à crochet extérieur (H1), dans la première position des contacts à crochets (H1, H2, H3), et la surface d'appui (7') de l'autre contact à crochet extérieur (H3) dans la deuxième position, la relation suivante :

   $$c = |2a - b|,$$

   quand les segments a et b se chevauchent, et

   $$c = 2a + b$$

   quand les segments a et b ne se chevauchent pas.

2. Adaptateur selon la revendication 1, caractérisé en ce que la distance b est définie par la distance entre les axes (11) de trous taraudés (12) se trouvant contre les socles de contact (10, 10') des groupes de contacts de raccordement (19, 19') de l'appareil électrique (2), et que la distance a est définie par la distance entre la surface d'appui (7, 7') et l'axe (13) d'un trou aménagé à travers les contacts de raccordement (9) de l'adaptateur (1), auquel cas, à l'état monté, l'axe (13) des trous des contacts de raccordement (9) de l'adaptateur (1) coïncide avec l'axe (11) de l'un des groupes de contacts de raccordement (19) de l'appareil (2).

3.  Adaptateur selon la revendication 1 ou 2, caractérisé en ce que l'appareil électrique est un interrupteur-sectionneur de sécurité.

4.  Adaptateur selon l'une des revendications 1 à 3, caractérisé en ce que les contacts à crochets (H1, H2, H3) sont logés dans des évidements (4) aménagés dans l'enveloppe (1), évidements qui pour l'essentiel sont réalisés sous forme de cavités oblongues, prismatiques rectangulaires, dans lesquelles on peut insérer au moins une partie (25) d'un contact à crochet (H1, H2, H3), en s'appuyant contre au moins une paroi frontale (4') de la cavité, et aussi, après rotation de 180°, par appui contre la paroi frontale opposée (4″) de la cavité.

5.  Adaptateur selon la revendication 4, caractérisé en ce que l'évidement (4) possède un ergot d'encliquetage (26), destiné à empêcher une chute d'un contact à crochet (H1, H2, H3).

6.  Adaptateur selon l'une des revendications 1 à 5, caractérisé en ce que, à l'exception des contacts et des ponts de contact, il est constitué de plastique.

7.  Adaptateur selon l'une des revendications 1 à 6, caractérisé en ce que, dans une direction parallèle aux barres omnibus (L1, L2, L3), il est plus étroit que l'appareil (2) destiné à être placé dessus.

8.  Adaptateur selon la revendication 7, caractérisé en ce que les ponts de contact ont une section transversale essentiellement carrée, et que l'adaptateur est, d'au moins la largeur d'un appui de barre omnibus, plus étroit que l'appareil (2) destiné à être placé dessus.

9.  Adaptateur selon l'une des revendications 1 à 9, caractérisé en ce que les contacts à crochets (H1, H2, H3) ont la forme d'un L, et que la section transversale de la branche du L qui dépasse du fond (5) de l'enveloppe coïncide avec la section transversale de l'évidement (4).

10. Adaptateur selon la revendication 9, caractérisé en ce que, pour loger la branche du L d'un contact à crochet (H1, H2, H3), on prévoit au moins deux évidements dans le fond (5) de l'enveloppe (3).

11. Adaptateur selon la revendication 9 ou 10, caractérisé en ce que la section transversale de la branche du L et des évidements (4) est circulaire, carrée, ou rectangulaire oblongue.

12. Adaptateur selon l'une des revendications 1 à 8, caractérisé en ce que les crochets (H1, H2, H3) ont la forme d'un U, une branche (25) de la partie en U étant logée dans une cavité (4) aménagée dans l'adaptateur (1), tandis que la deuxième branche du U (24) court à l'extérieur de l'enveloppe (2) et parallèlement à son fond (5), de sorte que la traverse de raccordement (6) des deux branches (24, 25) du U s'étend vers l'extérieur à partir du fond (5) de l'enveloppe (2), tandis que la longueur de la première branche (25) du U correspond à la longueur de la cavité (4), et que les parois frontales de cette branche (25) s'appuient en pleine surface contre les surfaces frontales de la cavité (4), l'une de ces surfaces frontales de la branche du U coïncidant avec la surface de base de la traverse de raccordement (6).

13. Adaptateur selon la revendication 12, caractérisé en ce que les crochets (H1, H2, H3), ayant en vue latérale la forme d'un U, est aussi conçu de façon à avoir en coupe transversale la forme d'un U avec des parois latérales s'étendant vers l'extérieur à partir de l'enveloppe (2) de l'adaptateur (1), et étant symétriques l'une de l'autre, la traverse de raccordement des deux parois latérales s'appuyant contre la branche (25), logée dans la cavité (4), du U des crochets (H1, H2, H3).

14. Adaptateur selon la revendication 13, caractérisé en ce que la traverse de raccordement de la branche (25) du U présente un trou taraudé, dont l'axe court d'une manière essentiellement parallèle à la pièce de raccordement (6).

**Fig.1**

Fig 2

Fig. 3

EP 0 440 933 B1

Fig.4

Fig. 5